# EUROPÄISCHE PATENTANMELDUNG

(11) **EP 4 564 649 A1**
(43) Veröffentlichungstag der Anmeldung: **04.06.2025**
(21) Anmeldenummer: 24202273.9
(22) Anmeldetag: 24.09.2024
(51) Int. Cl.: H02J 50/10, H02J 50/60, H02J 50/80, H04B 5/79

(54) **VERFAHREN UND STEUEREINHEIT ZUM ÜBERWACHEN EINES ENERGIEÜBERTRAGUNGSBEREICHS EINES MOBILGERÄTS**

(30) Priorität: 25.10.2023 DE 102023129412
(71) Anmelder: Miele & Cie. KG, 33332 Gütersloh (DE)
(72) Erfinder: Wilkens, Henrik, 49080 Osnabrück (DE); Ennen, Volker, 32257 Bünde (DE); Auell, Alexander, 33613 Bielefeld (DE); Hormann, Michael, 33332 Gütersloh (DE)

(57) **Zusammenfassung**

Die Erfindung betrifft ein Verfahren (300) zum Überwachen eines Energieübertragungsbereichs (155) eines Mobilgeräts (100), wobei das Verfahren (300) einen Schritt des Prüfens (310) umfasst, ob sich ein Störobjekt (142) in einem Energieübertragungsbereich (155) vor einer Energieübertragungseinheit (135) des Mobilgerätes (100) befindet. Weiterhin umfasst das Verfahren (300) einen Schritt des Ausgebens (320) eines Prüfsignals (215), an eine außerhalb des Mobilgerätes (100) abgeordnete Induktionseinheit (125) zur Bereitstellung einer elektromagnetischen Energie (120) zur Übertragung durch den Energieübertragungsbereich (155) an die Energieübertragungseinheit (135), wobei das Prüfsignal (215) einen Hinweis auf ein erkanntes Störobjekt (142) oder auf kein erkanntes Störobjekt (142) im Energieübertragungsbereich (155) aufweist.

## Beschreibung

Der hier vorgestellte Ansatz betrifft ein Verfahren und eine Steuereinheit zum Überwachen eines Energieübertragungsbereichs eines Mobilgeräts gemäß den Hauptansprüchen.

In modernen Geräten wird der induktive Austausch von Energie in verschiedenen Anwendungen ermöglicht. Problematisch ist jedoch eine Energieübertragung von einer Sendeeinheit zu einer Empfangseinheit, wenn sich ein oder mehrere Störobjekte in einem Bereich zwischen der Sendeeinheit und der Empfangseinheit befinden, da in diesem Fall eine Energieübertragung nicht effizient erfolgen kann und gegebenenfalls sich diese Störobjekte erwärmen können und hierbei Schäden am Mobilgerät verursachen könnten. Wenn Fremdkörper bzw. diese Störobjekte, wie z. B. ein Schlüssel, Münzen oder Gegenstände mit RFID-Chip auf bzw. neben der Sendeeinheit platziert werden, können diese ebenfalls zerstört werden. Erkennungsmethoden basierend auf einer Detektionseinheit über den Sender bzw. die Sendeeinheit ermöglichen eine solche Erkennung. Allerdings kann eine solche Vorgehensweise ungünstig sein, da entsprechende Störobjekte nicht immer eindeutig erkannt werden können.

Der hier vorgestellte Ansatz stellt sich die Aufgabe, eine verbesserte Möglichkeit zum Überwachen eines Energieversorgungsbereichs eines Mobilgeräts zu schaffen.

Erfindungsgemäß wird diese Aufgabe durch ein verbessertes Verfahren und eine verbesserte Steuereinheit zum Überwachen eines Energieübertragungsbereichs eines Mobilgeräts mit den Schritten bzw. Merkmalen der Hauptansprüche gelöst. Vorteilhafte Ausgestaltungen und Weiterbildungen der Erfindung ergeben sich aus den nachfolgenden Unteransprüchen.

Der hier vorgestellte Ansatz schafft ein Verfahren zum Überwachen eines Energieübertragungsbereichs eines Mobilgeräts, wobei das Verfahren die folgenden Schritte aufweist:
- Prüfen, ob sich ein Störobjekt in einem Energieübertragungsbereich vor einer Energieübertragungseinheit des Mobilgerätes befindet; und
- Ausgeben eines Prüfsignals, an eine außerhalb des Mobilgerätes abgeordnete Induktionseinheit zur Bereitstellung einer elektromagnetischen Energie zur Übertragung durch den Energieversorgungsbereich an die Energieversorgungseinheit, wobei das Prüfsignal einen Hinweis auf ein erkanntes Störobjekt oder auf kein erkanntes Störobjekt im Energieübertragungsbereich aufweist.

Unter einer Energieversorgungseinheit kann beispielsweise eine Spule zum Empfangen von elektromagnetischer Energie verstanden werden, mittels der ein Energiespeicher wie beispielsweise ein Akkumulator des Mobilgerätes geladen oder das Mobilgerät direkt betrieben werden kann. Unter einem Störobjekt kann ein (beispielsweise metallisches) Objekt verstanden werden, welches sich im Energieversorgungsbereich befindet und eine effiziente Energieübertragung der elektromagnetischen Energie von einer Sende- oder Induktionseinheit zur Empfängereinheit stört oder behindert. Unter einem Mobilgerät kann hierbei ein ortsveränderliches Gerät verstanden werden, welches sich auf oder über dem Energieversorgungsbereich platzieren lässt. Beispielsweise kann das Mobilgerät als ein bewegliches Hausgerät, beispielsweise ein Kocher oder Mixer oder auch als ein Mobiltelefon ausgestaltet sein, welches über die Platzierung auf dem Energieversorgungsbereich mit Energie versorgt werden soll. Unter einem Prüfsignal kann ein Signal verstanden werden, welches beispielsweise drahtlos von einer Sendeeinrichtung des Mobilgerätes ausgegeben wird und eine Information darüber enthält, ob durch eine Detektionseinheit im Mobilgerät ein Störobjekt in dem Energieübertragungsbereich erkannt wurde. Dieses Prüfsignal kann hierbei an eine Induktionseinheit und/oder eine Sendeeinheit ausgegeben werden, die beispielsweise in einem Kochfeld integriert ist und die zur Ausgabe der elektromagnetischen Energie ausgebildet ist. Auf diese Weise lässt sich dieser Induktionseinheit von Seiten des Mobilgerätes ein Hinweis auf die Erkennung des Störobjektes im Energieübertragungsbereich geben.

Der hier vorgestellte Ansatz basiert auf der Erkenntnis, dass durch die Detektion von Störobjekten auf Seiten des Mobilgerätes und die Ausgabe eines entsprechenden Signals eine sehr zuverlässige und sichere Erkennung eines Störobjektes im Energieübertragungsbereich möglich ist, was dann zu einer entsprechenden Ansteuerung einer Ausgabe der elektromagnetischen Energie an die Energieübertragungseinheit des Mobilgerätes genutzt werden kann. Auf diese Weise kann einerseits verhindert werden, dass bei dem Vorhanden eines Störobjekts im Energieübertragungsbereich ineffizient elektromagnetische Energie ausgegeben wird und andererseits eine gewünschte Aufheizung des Störobjekts erfolgt, die wiederum zu Schäden an Teilen des Mobilgerätes führen könnte. Durch die Erweiterung der Fremdobjekterkennung bzw. FOD (FOD = Foreign Objects Detection) auf Sensorik im Klein- bzw. Mobilgerät, lässt sich die Genauigkeit der FOD erhöhen und somit die Sicherheit des Gesamtsystems steigern.

Besonders günstig ist eine Ausführungsform des hier vorgeschlagenen Ansatzes, bei dem vor dem Schritt des Prüfens ein Empfangen einer elektromagnetisch übertragenen Energie ausgeführt wird, um eine Prüfeinheit zur Ausführung des Schrittes des Prüfens mit elektrischer Energie zu versorgen. Dieser Empfang der elektromagnetisch übertragenen Energie kann von der Induktionseinheit und/oder von einem Kommunikationsmodul, wie etwa einem NFC-Modul ausgeführt werden. Eine solche Ausführungsform bietet den Vorteil, dass eine Energie zum Betreiben der Prüfeinheit direkt, beispielsweise von der Induktionseinheit, bereitgestellt werden kann, sodass auch bei vollständig geleertem Energiespeicher des Mobilgerätes zunächst elektrische Energie für die Prüfeinheit vorliegt, die dann zur Prüfung auf das Vorhandensein des Störobjekts im Energieübertragungsbereich verwendet werden kann.

Denkbar ist weiterhin eine Ausführungsform des hier vorgeschlagenen Ansatzes, bei der im Schritt des Prüfens eine Prüfung auf das Vorhandensein des Störobjekts mittels zumindest eines Annäherungssensors, eines kapazitiven Sensors und/oder eines Temperatursensors ausgeführt wird. Eine solche Ausführungsform bietet den Vorteil, einen oder mehrere entsprechend ausgestaltete Sensoren kleinteilig und somit gut am oder um das Mobilgerät herum platzieren zu können, sodass eine schnelle und zuverlässige Erkennung der die Störobjekte im Energieübertragungsbereich.

Auch kann gemäß einer weiteren Ausführungsform im Schritt des Prüfens eine Aufstellfläche des Mobilgerätes im Wesentlichen vollständig auf das Vorhandensein des Störobjektes hin geprüft wird. Hierbei kann beispielsweise ein Bereich von mehr als der Hälfte, insbesondere mehr als 80 Prozent der Aufstellfläche, die beispielsweise den Energieübertragungsbereich bildet, auf das Vorhandensein von Störobjekten hin überprüft werden. Eine solche Ausführungsform bietet den Vorteil, nicht nur punktuell das Vorhandensein eines Störobjekts detektieren zu können, sondern möglichst den Hauptanteil des Energieübertragungsbereichs überwachen zu können.

Günstig ist weiterhin eine Ausführungsform des hier vorgestellten Ansatzes, bei dem im Schritt des Prüfens ein metallisches Objekt als Störobjekt erkannt wird. Solche Ausführungsform bietet den Vorteil einer besonders zuverlässigen Erkennung eines Objekts, welches sich noch dazu während eines Energieübertragungsvorgangs meist ungünstigerweise erhitzt und somit potenzielle Schäden am Mobilgerät verursachen könnte.

Auch kann gemäß einer Ausführungsform des hier vorgeschlagenen Ansatzes ein Verfahren zur Ausgabe einer elektromagnetischen Energie durch eine Induktionseinheit an eine Energieempfangseinheit eines Mobilgerätes vorgesehen sein, wobei das Verfahren die folgenden Schritte aufweist:
- Einlesen eines Prüfsignals von dem außerhalb der Induktionseinheit angeordneten Mobilgerät, wobei das Prüfsignal einen Hinweis auf ein erkanntes Störobjekt oder auf kein erkanntes Störobjekt im Energieübertragungsbereich der Energieübertragungseinheit aufweist; und
- Ansteuern einer Ausgabe von elektromagnetischer Energie durch die Induktionseinheit an die Energieempfangseinheit des Mobilgerätes, ansprechend auf das Prüfsignal.

Eine solche Ausführungsform, die beispielsweise in einer Steuereinheit der Induktionseinheit bzw. dem Kochfeld realisiert wird, ermöglicht die zuverlässige Erkennung von Störobjekten im Energieübertragungsbereich, sodass ein möglichst effizienter Betrieb der Energieübertragung an das Mobilgerät erfolgen kann. Beispielsweise kann die Ausgabe von elektromagnetischer Energie durch die Induktionseinheit unterbrochen oder reduziert werden, wenn aus dem Prüfsignal ein Hinweis darauf vorliegt, dass ein Störobjekt im Energieübertragungsbereich der Energieübertragungseinheit erkannt wurde. Alternativ oder zusätzlich kann die Ausgabe von elektromagnetischer Energie durch die Induktionseinheit freigegeben werden, wenn aus dem Prüfsignal Hinweis darauf vorliegt, dass kein Störobjekt im Energieübertragungsbereich erkannt wurde.

Gemäß einer weiteren Ausführungsform des hier vorgeschlagenen Ansatzes kann im Schritt des Ansteuerns die Ausgabe der elektromagnetischen Energie unterdrückt wird, wenn aus dem Prüfsignal ein Hinweis auf das Vorhandensein eines im Energieübertragungsbereich befindliches Störobjekt entnehmbar ist. Eine solche Ausführungsform ermöglicht eine möglichst effiziente und beschädigungslose Energieübertragung zum Mobilgerät.

Weiterhin kann gemäß einer besonders günstigen Ausführungsform im Schritt des Ansteuerns die Ausgabe der elektromagnetischen Energie freigegeben werden, wenn aus dem Prüfsignal ein Hinweis auf kein im Energieübertragungsbereich befindliches Störobjekt entnehmbar ist. Eine solche Ausführungsform ermöglicht ebenfalls eine möglichst effiziente Energieübertragung an das Mobilgerät.

Um eine Prüfung auf das Vorliegen eines Störobjekts im Energieübertragungsbereich einzuleiten, ohne jedoch eine möglicherweise starke Erwärmung dieses Störobjekts zu bewirken, kann gemäß einer besonders günstigen Ausführungsform des hier vorgeschlagenen Ansatzes ein vor dem Schritt des Einlesens ausgeführten Schritt des Ausgebens einer elektromagnetischen Energie an die Energieempfangseinheit des Mobilgerätes vorgesehen sein, wobei die im Schritt des Ausgebens ausgegebene elektromagnetische Energie geringer ist, als ein im Schritt des Ansteuerns angesteuerte Ausgabe von elektromagnetischer Energie an die Energieempfangseinheit des Mobilgerätes. Eine solche Ausführungsform ermöglicht den Betrieb einer entsprechenden Prüfeinheit im Mobilgerät, über welche dann das Vorliegen des Störobjekts in Energieübertragungsbereich auf Seiten des Mobilgerätes erkannt werden kann.

Weiterhin kann gemäß einer Ausführungsform des hier vorgeschlagenen Ansatzes ein Schritt des Überprüfens vorgesehen sein, ob sich ein Störobjekt in einem Energieübertragungsbereich der Energieübertragungseinheit des Mobilgerätes befindet, wobei im Schritt des Ansteuerns die Ausgabe der elektromagnetischen Energie ferner unter Verwendung eines im Schritt des Überprüfens erhaltenen Ergebnisses angesteuert wird, dass sich kein Störobjekt in einem Energieübertragungsbereich der Energieübertragungseinheit des Mobilgerätes befindet. Eine solche Ausführungsform bietet den Vorteil, dass auch seitens der Induktionseinheit bzw. des Kochfeldes eine Überprüfung vorgenommen werden kann, ob sich ein Störobjekt in dem Energieübertragungsbereich des Mobilgerätes befindet, sodass eine doppelte Überprüfung, einerseits von Seiten der Induktionseinheit und andererseits von Seiten des Mobilgerätes ausgeführt werden kann und somit eine besonders zuverlässige Identifizierung dieses Störobjekts im Energieübertragungsbereich ermöglicht.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem Großküchengerät oder einem Reinigungs- oder Desinfektionsgerät, einem Kleinsterilisator, einem Großraumdesinfektor oder einer Container-Waschanlage eingesetzt werden, um ein entsprechendes Mobilgerät zu laden.

Ein Ausführungsbeispiel der Erfindung ist in den Zeichnungen rein schematisch dargestellt und wird nachfolgend näher beschrieben. Es zeigt
- Figur 1: eine perspektivische Ansicht eines Ausführungsbeispiels eines Mobilgeräts, welches auf einem Kochfeld betrieben wird;
- Figur 2: eine Querschnittsansicht eines Kochfelds mit einer darunter angeordneten Induktionseinheit sowie ein Mobilgerät;
- Figur 3: ein Ablaufdiagramm eines Ausführungsbeispiels eines Verfahrens zum Überwachen eines Energieübertragungsbereichs vor einer Energieübertragungseinheit eines Mobilgeräts; und
- Figur 4: ein Ablaufdiagramm eines Ausführungsbeispiels eines Verfahrens zur Ausgabe einer elektromagnetischen Energie durch eine Induktionseinheit an eine Energieübertragungseinheit eines Mobilgerätes.

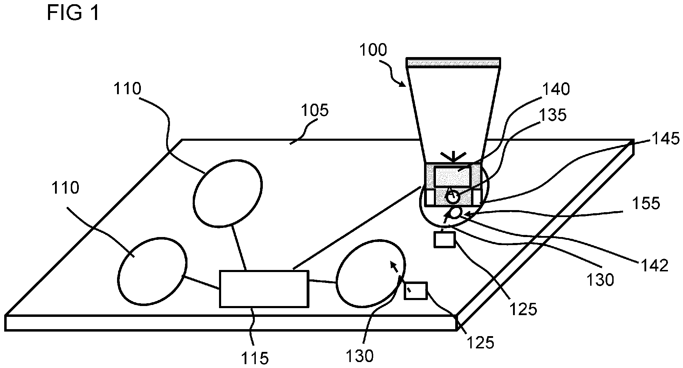

Figur 1 zeigt eine perspektivische Ansicht eines Ausführungsbeispiels eines Mobilgeräts 100, welches auf einem Kochfeld 105 steht. Das Gerät 100 kann hierbei als Kleingerät oder Küchengerät oder auch als Mobiltelefon ausgestaltet sein, das über eine drahtlose Energieversorgung mit Energie versorgt werden soll. Das Kochfeld 100 umfasst hierbei Standard-Kochstellen 110, die zu einem Erhitzen von Kochgeschirr ausgelegt sind. Beispielsweise mittels eines 115??angesteuert werden können. Zusätzlich umfasst die das Kochfeld 105 Spezial-Kochstellen 120, bei denen nicht nur die Funktion einer Standard-Kochstelle 110 realisiert ist, sondern noch zusätzlich unter dem Kochfeld 105 je eine Energieübertragungseinheit 125 vorgesehen ist, mittels welcher elektromagnetische Energie 130 beispielsweise in Form von einer elektromagnetischen Strahlung abgegeben werden kann. Diese elektromagnetische Energie 130 kann dann beispielsweise von einer Energieübertragungseinheit 135 im Mobilgerät 100 aufgenommen werden und zum Aufladen des Energiespeichers 140 des Mobilgeräts 100 verwendet werden. Um sicherzustellen, dass kein Störobjekt 142 in einem Energieübertragungsbereich vorhanden ist, über welchen die elektromagnetische Energie 130 zur Energieübertragungseinheit 135 übertragen werden soll, sind nun ein oder mehrere Sensoren 145 (beispielsweise als Teil einer Prüfeinheit 150) im Mobilgerät 100 vorgesehen. Diese Sensoren 145 sind beispielsweise ausgebildet, Veränderungen einer Kapazität oder einer Temperatur im Nahbereich des Mobilgeräts 100 speziell im Energieübertragungsbereich 155, durch den die elektromagnetische Energie 130 von der Induktionseinheit 125 zur Energieübertragungseinheit 135, zu erfassen. Durch eine solche Veränderung, beispielsweise beim Annähern des Mobilgeräts 100 an die Spezial-Kochstellen 120 kann nun das Vorhandensein von solchen Störobjekten 142 erkannt werden.

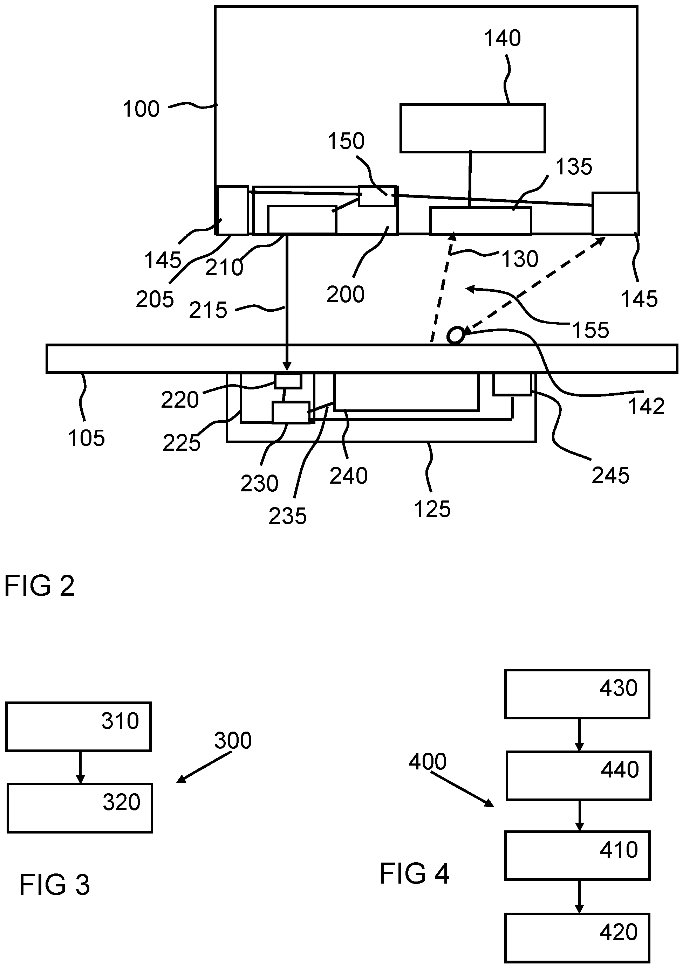

Figur 2 zeigt eine Querschnittsansicht eines Kochfelds 105 mit einer darunter angeordneten Induktionseinheit 125 sowie ein Mobilgerät 100, welches auf einem Bereich des Kochfeldes 105 über der Induktionseinheit 125 abgestellt wird. Das Mobilgerät 100 umfasst hierbei eine Steuereinheit 200 mit einer Prüfeinheit 105 sowie eine Ausgabeeinheit 210. Die Prüfeinheit 105, der beispielsweise die Sensoren 145 im oder am Bereich einer auf Stellfläche 205 zugeordnet sind, kann hierbei unter Verwendung von Sensorsignalen dieser Sensoren 125 prüfen, ob sich ein Störobjekt 142 im Energieübertragungsbereich 155 der Energieübertragungseinheit 135 befindet. Dies kann beispielsweise dadurch erfolgen, dass die Sensoren eine Veränderung einer Kapazität im Energieübertragungsbereich 155 feststellen, die beispielsweise darauf zurückzuführen ist, dass sich ein metallisches Störobjekt 142 in diesem Energieübertragungsbereich befindet. Wird nur durch die Prüfeinheit 150 erkannt, dass sich ein solches Störobjekt 142 im Energieübertragungsbereich 155 befindet, kann der Ausgabeeinheit 210 beispielsweise ein entsprechendes Prüfsignal 215 ausgegeben werden das einen Hinweis auf ein bekanntes Störobjekt 142 oder (in dem in der Figur 2 nicht dargestellten Fall) auf kein erkanntes Störobjekt 142 gibt. Dieses Prüfsignal 215 kann von einer Einleseschnittstelle 220 einer Steuereinheit 225 der Induktionseinheit 125 eingelesen werden, wobei eine Ansteuereinheit 230 der Steuereinheit 225 dann mittels eines Ansteuersignals 235 eine Induktionsspule 240 der Induktionseinheit 125 ansteuert, die die elektromagnetische Energie 130 ausgibt oder bereitstellt. Hierbei kann auch die Leistung der elektromagnetischen Energie 130 variiert oder komplett unterbrochen werden, je nachdem ob und/oder wo das Störobjekt 142 erkannt wurde. Die von der Induktionsspule 240 ausgegebene elektromagnetische Energie 130 kann in der Energieempfangseinheit 135 in einem elektrischen Strom verwandelt werden, mit welchem des Mobilgeräts 100 betrieben oder ein optionaler Energiespeicher 135 geladen wird.

Auch kann gemäß einem optionalen Ausführungsbeispiel ein weiterer Sensor 245 an oder in der Induktionseinheit 125 vorgesehen sein, der ebenfalls in der Lage ist, das Vorhandensein des Störobjekts 142 im Energieübertragungsbereich 155 zu erkennen. Der weitere Sensor 245 kann dabei analog zu dem Sensor oder den Sensoren 145 ausgestaltet sein. Hierdurch kann auch eine doppelte Absicherung der Erkennung des Störobjekts 142 im Energieübertragungsbereich 155 sowohl seitens des Mobilgeräts 100 als auch seitens der Induktionseinheit 125 vorgenommen werden, sodass eine sehr zuverlässige Erkennung dieses Störobjekts 142 möglich wird. Die Ansteuerung der Ausgabe von elektromagnetische Energie 130 durch die Induktionsspule 135 mittels des Ansteuersignals 235 kann somit auch in Abhängigkeit eines Sensorsignals des weiteren Sensors 245 erfolgen.

Denkbar ist auch, dass vor dem Erhalt des Prüfsignals 215 durch die Einleseschnittstelle 220 bereits von der Induktionsspule 240 eine elektromagnetische Energie 130 abgegeben wird, die jedoch eine geringere Leistung aufweist, als die später abzugebende elektromagnetische Energie 130 zum Laden des Energiespeichers 135. Hierdurch kann beispielsweise in der Energieübertragungseinheit 135 ein kleiner elektrischer Strom bzw. eine geringere elektrische Energie generiert werden, der/die zum Betrieb der Steuereinheit 200 bzw. der Sensoren 145 erforderlich ist, sodass bereits bei der Annäherung eines Mobilgeräts 100 an den Energieübertragungsbereich 155 auch bei einem geleerten Energiespeicher 135 seitens des Mobilgeräts 100 eine Prüfung ermöglicht wird, ob sich im Energieübertragungsbereich 155 ein solches Störobjekt 142 befindet.

Figur 3 zeigt ein Ablaufdiagramm eines Ausführungsbeispiels eines Verfahrens 300 zum Überwachen eines Energieübertragungsbereichs vor einer Energieübertragungseinheit eines Mobilgeräts, wobei das Verfahren 300 einen Schritt 310 des Prüfens umfasst, ob sich ein Störobjekt in einem Energieübertragungsbereich des Energieempfängers des Mobilgerätes befindet. Ferner umfasst das Verfahren 300 einen Schritt 320 des Ausgebens eines Prüfsignals umfasst, an eine außerhalb des Mobilgerätes abgeordnete Induktionseinheit zur Bereitstellung einer elektromagnetischen Energie zur Übertragung durch den Energieübertragungsbereich an die Energieübertragungseinheit, wobei das Prüfsignal einen Hinweis auf ein erkanntes Störobjekt oder auf kein erkanntes Störobjekt im Energieübertragungsbereich der Energieübertragungseinheit aufweist.

Figur 4 zeigt ein Ablaufdiagramm eines Ausführungsbeispiels eines Verfahrens 400 zur Ausgabe einer elektromagnetischen Energie durch eine Induktionseinheit an eine Energieempfangseinheit eines Mobilgerätes, wobei das Verfahren 400 einen Schritt 410 des Einlesens eines Prüfsignals von dem außerhalb der Induktionseinheit angeordneten Mobilgerät umfasst, wobei das Prüfsignal einen Hinweis auf ein erkanntes Störobjekt oder auf kein erkanntes Störobjekt im Energieübertragungsbereich der Energieübertragungseinheit aufweist. Ferner umfasst das Verfahren 400 einen Schritt 420 des Ansteuerns einer Ausgabe von elektromagnetischer Energie durch die Induktionseinheit an die Energieübertragungseinheit des Mobilgerätes, ansprechend auf das Prüfsignal.

Optional kann weiterhin vor dem Schritt 410 des Einlesens ein Schritt 430 des Ausgebens einer elektromagnetischen Energie an die Energieübertragungseinheit des Mobilgerätes ausgeführt werden, wobei die im Schritt 430 des Ausgebens ausgegebene elektromagnetische Energie geringer ist, als ein im Schritt 420 des Ansteuerns angesteuerte Ausgabe von elektromagnetischer Energie an die Energieübertragungseinheit des Mobilgerätes. Auch kann vor dem Schritt 430 des Ausgebens und/oder vor dem Schritt 410 des Einlesens und/oder vor dem Schritt 420 des Ansteuerns ein Schritt 440 des Überprüfens vorgesehen sein, ob sich ein Störobjekt in dem Energieübertragungsbereich der Energieübertragungseinheit des Mobilgerätes befindet, wobei im Schritt des Ansteuerns die Ausgabe der elektromagnetischen Energie ferner unter Verwendung eines im Schritt 440 des Überprüfens erhaltenen Ergebnisses angesteuert wird, dass sich kein Störobjekt in dem Energieübertragungsbereich der Energieübertragungseinheit des Mobilgerätes befindet

Zusammenfassend ist anzumerken, dass der hier vorgestellte Ansatz alternativ oder zusätzlich zu einer FOD über die senderseitige Energieübertragungseinheit bzw. die Sensoren 245 der hier so bezeichneten Induktionseinheit über die Empfangseinheit bzw. die Prüfeinheit 150 eine (zweite) FOD durchgeführt, sobald diese Prüfeinheit 150 mit Strom versorgt wird. Der hierfür induzierte Storm wird beispielsweise nachdem die Empfangseinheit bzw. Energieübertragungseinheit 135 sich über eine NFC-Schnittstelle wie die Ausgabeeinheit 210 angemeldet hat zuerst begrenzt bis durch das Kleingerät bzw. das Mobilgerät 100 die (zweite) erweiterte FOD durchgeführt wurde.

Das Kleingerät, d. h. das hier so bezeichnete Mobilgerät 100, wird mit zusätzlicher Sensorik 145 (Annäherungssensoren, Kapazitive Sensoren, Temperatursensoren am Boden bzw. der Aufstellfläche 205) ausgestattet, um unerwünschte Gegenstände, d. h. die Störobjekte 145 in unmittelbarer Nähe zu erkennen.

Beispielsweise kann in einem ersten Ausführungsszenario in der Seitenwand eines Kleingeräts bzw. Mobilgerätes 100 umlaufende kapazitive Sensoren 145 angebracht. Wenn ein metallischer Gegenstand als Störobjekt 142 sich in der Nähe des Kleingerätes bzw. Mobilgerätes 100 befindet, wird die FOD bzw. die Prüfeinheit 150 aktiviert und ein Signal 215 an die Sendeeinheit bzw. die Einleseschnittstelle 220 der Steuereinheit 225 geschickt, so dass die Leistungszufuhr bzw. die Ausgabe der elektromagnetischen Energie 130 abgesenkt oder unterbrochen werden kann.

In einem zweite Ausführungsszenario sind beispielsweise am Boden des Kleingeräts bzw. Mobilgeräts 100 Thermosensoren angebracht, die flächig die Auflagefläche bzw. Aufstellfläche 205 überwachen. Wenn ein metallischer Gegenstand wie das Störobjekt 142 sich zwischen Sender bzw. Induktionsspule 240 und Empfänger bzw. Energieübertragungseinheit 135, also im Energieübertragungsbereich 155 befinden, wird dieser deutlich wärmer als der Kleingeräteboden und die Sensorik bzw. die Prüfeinheit 150 löst die FOD aus und gibt ein entsprechendes Prüfsignal 215 aus. Mit diesen Ausgestaltungen zwischen Steuereinheit 225 der Induktionseinheit 125 und Steuereinheit 200 des Mobilgerätes 100 kann die Reichweite und Sicherheit der Foreign Object Detection (FOD) deutlich erhöht und somit die Betriebssicherheit bzw. Betriebseffizienz der Ladung des Energiespeichers 130 des Mobilgerätes 100 gesteigert erhöht werden.

## Patentansprüche

1. Verfahren (300) zum Überwachen eines Energieübertragungsbereichs (155) eines Mobilgeräts (100), wobei das Verfahren (300) die folgenden Schritte aufweist:
- Prüfen (310), ob sich ein Störobjekt (142) in einem Energieübertragungsbereich (155) vor einer Energieübertragungseinheit (135) des Mobilgerätes (100) befindet; und
- Ausgeben (320) eines Prüfsignals (215), an eine außerhalb des Mobilgerätes (100) abgeordnete Induktionseinheit (125) zur Bereitstellung einer elektromagnetischen Energie (120) zur Übertragung durch den Energieübertragungsbereich (155) an die Energieübertragungseinheit (135), wobei das Prüfsignal (215) einen Hinweis auf ein erkanntes Störobjekt (142) oder auf kein erkanntes Störobjekt (142) im Energieübertragungsbereich (155) aufweist.

2. Verfahren (300) gemäß Anspruch 1, bei dem vor dem Schritt (310) des Prüfens ein Empfangen einer elektromagnetisch übertragenen Energie (130) ausgeführt wird, um eine Prüfeinheit (150) zur Ausführung des Schrittes (310) des Prüfens mit elektrischer Energie zu versorgen.

3. Verfahren (300) gemäß einem der vorangegangenen Ansprüche, wobei im Schritt (310) des Prüfens eine Prüfung auf das Vorhandensein des Störobjekts (142) mittels zumindest eines Sensors (145) ausgeführt wird, der als Annäherungssensor, als kapazitiver Sensor und/oder als Temperatursensor ausgebildet ist.

4. Verfahren (300) gemäß einem der vorangegangenen Ansprüche, wobei im Schritt (310) des Prüfens das Vorhandensein des Störobjektes (142) im Wesentlichen vollständig über eine Aufstellfläche (205) des Mobilgerätes (100) hin geprüft wird.

5. Verfahren (300) gemäß einem der vorangegangenen Ansprüche, wobei im Schritt (310) des Prüfens ein metallisches Objekt als Störobjekt (142) erkannt wird.

6. Verfahren (400) zur Ausgabe einer elektromagnetischen Energie (130) durch eine Induktionseinheit (125) an eine Energieübertragungseinheit (135) eines Mobilgerätes (100), wobei das Verfahren (400) die folgenden Schritte aufweist:
- Einlesen (410) eines Prüfsignals (215) von dem außerhalb der Induktionseinheit (125) angeordneten Mobilgerät (100), wobei das Prüfsignal (215) einen Hinweis auf ein erkanntes Störobjekt (142) oder auf kein erkanntes Störobjekt (142) im Energieübertragungsbereich (155) der Energieübertragungseinheit (135) aufweist; und
- Ansteuern (420) einer Ausgabe von elektromagnetischer Energie (130) durch die Induktionseinheit (125) an die Energieübertragungseinheit (135) des Mobilgerätes (100), ansprechend auf das Prüfsignal (215).

7. Verfahren (400) gemäß Anspruch 6, bei dem im Schritt (420) des Ansteuerns die Ausgabe der elektromagnetischen Energie (130) unterdrückt wird, wenn aus dem Prüfsignal (215) ein Hinweis auf das Vorhandensein eines im Energieübertragungsbereich (155) befindlichen Störobjekts (142) entnehmbar ist.

8. Verfahren (400) gemäß einem der Ansprüche 6 oder 7, bei dem im Schritt (420) des Ansteuerns die Ausgabe der elektromagnetischen Energie (130) freigegeben wird, wenn aus dem Prüfsignal (215) ein Hinweis auf kein im Energieübertragungsbereich (155) befindliches Störobjekt (142) entnehmbar ist.

9. Verfahren (400) gemäß einem der Ansprüche 6 bis 8, mit einem vor dem Schritt (410) des Einlesens ausgeführten Schritt (430) des Ausgebens einer elektromagnetischen Energie (130) an die Energieübertragungseinheit (135) des Mobilgerätes (100), wobei die im Schritt (430) des Ausgebens ausgegebene elektromagnetische Energie (130) geringer ist, als ein im Schritt (320) des Ansteuerns angesteuerte Ausgabe von elektromagnetischer Energie (130) an die Energieübertragungseinheit (135) des Mobilgerätes (100).

10. Verfahren (400) gemäß einem der Ansprüche 6 bis 9, mit einem Schritt (440) des Überprüfens, ob sich ein Störobjekt (142) in dem Energieübertragungsbereich (155) der Energieübertragungseinheit (135) des Mobilgerätes (100) befindet, wobei im Schritt (420) des Ansteuerns die Ausgabe der elektromagnetischen Energie (130) ferner unter Verwendung eines im Schritt (440) des Überprüfens erhaltenen Ergebnisses angesteuert wird, dass sich kein Störobjekt (142) in dem Energieübertragungsbereich (155) der Energieübertragungseinheit (135) des Mobilgerätes (100) befindet.

11. Steuereinheit (200, 225), die ausgebildet ist, um die Schritte (310, 320; 410, 420) des Verfahrens (300; 400) gemäß einem der vorangegangenen Ansprüche 1 bis 5 oder 6 bis 10 in entsprechenden Einheiten (150, 210, 220, 230) auszuführen und/oder anzusteuern.

12. Computer-Programmprodukt mit Programmcode zur Durchführung des Verfahrens (300, 400) nach einem der Ansprüche 1 bis 5 oder 6 bis 10, wenn das Computer-Programmprodukt auf einer Steuereinheit (200, 225) gemäß Anspruch 11 ausgeführt wird.

13. Maschinenlesbares Speichermedium, auf dem ein Computer-Programmprodukt gemäß Anspruch 12 gespeichert ist.

14. Mobilgerät (100) mit einer Steuereinheit (200) gemäß Anspruch 11, die ausgebildet ist, um die Schritte (310, 320) des Verfahrens (300) gemäß einem der vorangegangenen Ansprüche 1 bis 5 in entsprechenden Einheiten auszuführen und/oder anzusteuern.

15. Induktionseinheit (125) mit einer Steuereinheit (225) gemäß Anspruch 11, die ausgebildet ist, um die Schritte (410, 420) des Verfahrens (400) gemäß einem der vorangegangenen Ansprüche 6 bis 10 in entsprechenden Einheiten (220, 230) auszuführen und/oder anzusteuern.
